# EUROPEAN PATENT APPLICATION

(11) **EP 4 770 052 A1**
(43) Date of publication of application: **01.07.2026**
(21) Application number: 25215638.5
(22) Date of filing: 13.11.2025
(51) Int. Cl.: H04L 67/10, H04L 9/40, H04L 69/22, G06F 9/50, G06F 9/48, G06F 9/54

(54) **METHODS, SYSTEMS, ARTICLES OF MANUFACTURE AND APPARATUS TO MANAGE NETWORK NOTIFICATIONS**

(30) Priority: 26.12.2024 US 202419002023
(71) Applicant: Intel Corporation, Santa Clara, CA 95054 (US)
(72) Inventor: THYAGATURU, Akhilesh S., Ruskin, 33573 (US); MACNAMARA, Chris, Limerick, V94X65T (IE); GUIM BERNAT, Francesc, 08036 Barcelona (ES); BROWNE, John, Limerick, V94C44N (IE); KYLE, Jonathan, Atlanta, 30316 (US)
(74) Representative: Maiwald GmbH

(57) **Abstract**

Systems, apparatus, articles of manufacture, and methods are disclosed to manage network notifications. An example apparatus includes interface circuitry, machine-readable instructions, and at least one processor circuit to be programmed by the machine-readable instructions to cause transmission of a first signal based on a packet, the first signal including characteristics of the packet, and cause transmission of a second signal after the first signal, the second signal including a payload of the packet.

## Description

### BACKGROUND

Network connected devices coordinate to complete computing tasks in a diverse geographical manner. Unlike server monolith computing architectures, distributed networks permit computing resources to be applied in different locations and/or utilize computing resources with diverse capabilities.

### BRIEF DESCRIPTION OF THE DRAWINGS

FIG. 1 is a block diagram of an example environment in which example network function management circuitry operates to manage network notifications.
FIG. 2 is a block diagram of an alternate example environment in which example network function management circuitry operates to manage network notifications.
FIG. 3 is a block diagram of an example implementation of the network function management circuitry of FIGS. 1 and 2.
FIGS. 4-5 are flowcharts representative of example machine-readable instructions and/or example operations that may be executed, instantiated, and/or performed by example programmable circuitry to implement the network function management circuitry 102 of FIGS. 1-3.
FIG. 6 is a block diagram of an example processing platform including programmable circuitry structured to execute, instantiate, and/or perform the example machine-readable instructions and/or perform the example operations of FIGS. 4-5 to implement the network function management circuitry 102 of FIG. 3.
FIG. 7 is a block diagram of an example implementation of the programmable circuitry of FIG. 6.
FIG. 8 is a block diagram of another example implementation of the programmable circuitry of FIG. 6.

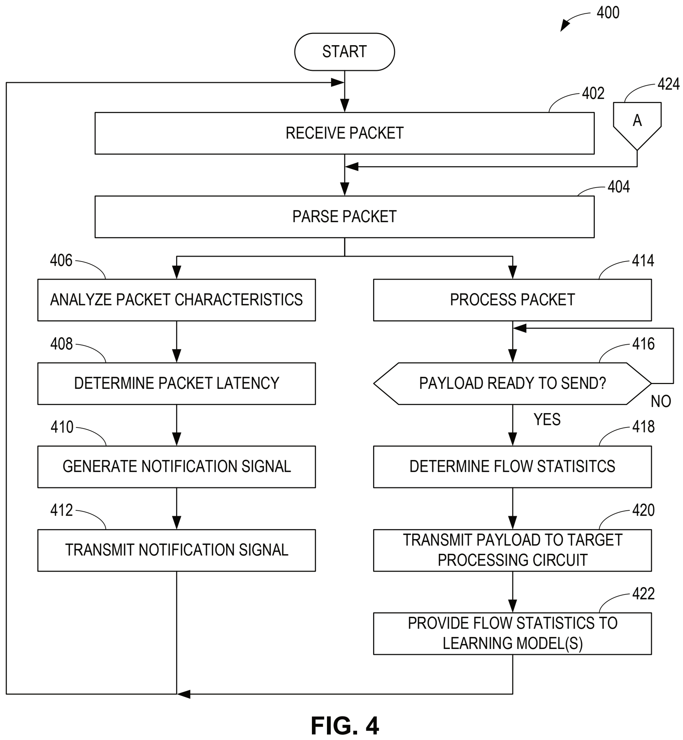

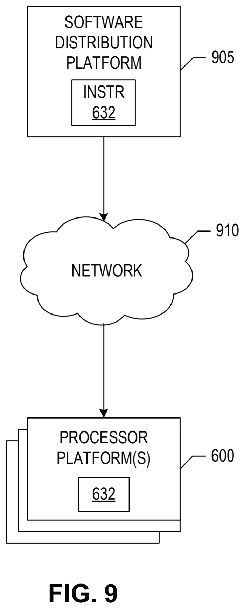

FIG. 9 is a block diagram of an example software/firmware/instructions distribution platform (e.g., one or more servers) to distribute software, instructions, and/or firmware (e.g., corresponding to the example machine-readable instructions of FIGS. 4-5) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

Network accessible computing devices perform any number of services in response to receiving data from network communication devices. In some environments, a pipeline computing system includes ingress circuitry, such as a network interface card (NIC), a smart NIC or an infrastructure processing unit (IPU). In some environments the IPU performs some packet processing in an effort to reduce a computational burden on one or more computing devices further down (subsequent to) the pipeline system. For instance, the IPU may execute a first network function on data to cause the data to be transmitted to a subsequent stage (e.g., a subsequent node) of the pipeline in a particular format. The subsequent stage of the pipeline may execute a second network function on the received data to generate output data, which may further be transmitted to additional subsequent stages of the pipeline.

Network functions at the different stages of the pipeline are nested and/or otherwise expected to operate with expected output behaviors (e.g., output packets are formatted in a particular manner), but operate in isolation with respect to each other until a payload is transmitted therebetween. To maintain quality of service (QoS) expectations, network functions in the subsequent stages operate in a polling mode to be ready for packet data (e.g., payload data, headers, etc.) from one or more network packets from a prior stage. As such, the one or more subsequent stages of the pipeline consume computing resources and/or otherwise generate waste while waiting for payload data from corresponding prior stage of the pipeline. Examples disclosed herein improve an efficiency of nested network functions by, in part, preventing and/or otherwise suppressing network function polling modes in subsequent pipeline stages when there is no packet payload data to be processed.

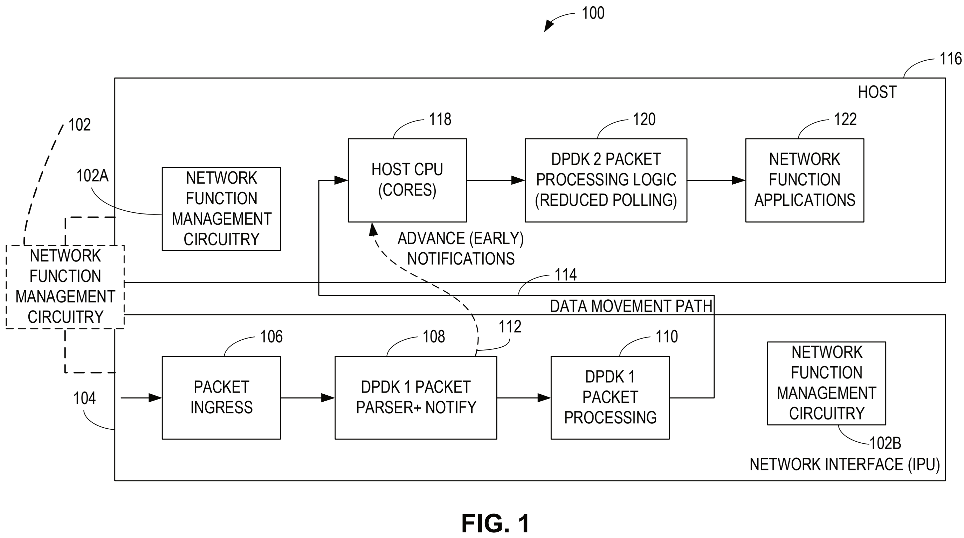

FIG. 1 is a block diagram of an example environment 100 having a multi-node pipeline with a nested network function flow between an example network interface 104 (e.g., a first node or stage) and an example host 116 (e.g., a second node or stage). While the illustrated example of FIG. 1 includes two example stages (e.g., a first stage with the network interface 104 and a second stage with the host 116), examples disclosed herein are not limited thereto. The network interface 104 may be a physical network interface, such as a NIC, an IPU, a fiber channel NIC (fNIC), etc., that is communicatively connected to the host 116, such as a computing platform, processing cores, system-on-chip (SoC), etc. The network interface 104 will be referred to herein as the IPU 104 as a matter of convenience and not limitation. In the illustrated example of FIG. 1, the IPU 104 is communicatively connected to the host 116 via a data movement path 114 and a notification path 112. In some examples, the data movement path 114 transmits and/or receives packet data (e.g., packet header data, packet payload data, etc.) and the notification path 112 transmits and/or receives notification signals having a relatively lower bandwidth. In some examples, the data movement path 114 may facilitate transmission and/or receipt of the notification signals when a separate notification path 112 is unavailable.

The example IPU 104 of FIG. 1 also includes a packet ingress stage 106, a first network function parsing stage 108, and a first network function processing stage 110. The packet ingress stage 106 accepts a packet flow (e.g., an instance of a packet being transmitted to the environment 100) and is parsed by the first network function parsing stage 108 to generate metadata. In some examples the packet ingress stage 106 is Ethernet or wireless (e.g., Wi-Fi). In some examples, the network functions (e.g., the first network function parsing stage 108, the first network function processing stage 110) are data plane development kit (DPDK) network functions, but examples disclosed herein are not limited thereto. Examples disclosed herein may include different types of network functions, such as, but not limited to, open data plane (ODP) network functions, or express data path (XDP) network functions. Examples disclosed herein may include one or more timing protocols to synchronize clock circuitry and/or other timing structure on the IPU 104, the host 116, and/or other communicatively connected structures (e.g., upstream or downstream) of the environment 100. In some examples, the timing protocols include Precision Time Protocol (PTP) and/or synchronization techniques consistent with IEEE 1588 and/or IEEE 802.1AS.

The example host 116 of FIG. 1 includes host computing resources 118, such as one or more processor circuits or cores. The host computing resources 118 are communicatively connected to the data movement path 114 as an ingress point for packet processing. The host 116 includes a second network function stage 120 to process packets received by the computing resources 118. As described above, the second network function stage 120 typically operates in a polling mode so that it is responsive to packets if and when they are received by the computing resources 118. However, the polling mode causes the computing resources 118 to consume power and generate heat in an effort to be responsive to the possibility of packet receipt. When the second network function stage 120 completes processing of received packets, a network function application stage 122 instantiates one or more functions, such as use-case specific functions (e.g., intrusion detection analysis, 5G user plane function (UPF) services, etc.).

Examples disclosed herein include the notification path 112 to facilitate transmission of a notification signal from the IPU 104 to the host 116 before packet data from the packet ingress stage 106 is processed by the IPU 104. In some examples, the first network function parsing stage 108 sends the notification signal via the notification path 112 in response to receiving information and/or packets. In some examples, the notification signal is generated to include a relatively small amount of information (e.g., relative to the data movement path 114) that identifies duration information (e.g., a timestamp, a time value, a latency value, etc.) associated with processing the received information and/or packets. For instance, the duration information may include a latency value associated with an amount of time expected to be consumed by the first network function processing stage 110 before an output is transmitted via the data movement path 114. As such, examples disclosed herein facilitate an ability to cause the second network function stage 120 to remain in a power save mode when there is no input data to process, and the notification signal causes the second network function stage 120 to enter an active mode (e.g., a polling mode) based on the received latency value so that it is ready to process received packets. In some examples disclosed herein, the notification signal enables a "just-in-time" mode of operation for the example environment 100.

As described in further detail below, the IPU 104 includes example network function management circuitry 102A, and the host 116 includes the example network function management circuitry 102B. While the illustrated example of FIG. 1 includes separate instances of the network function management circuitry 102 (e.g., the network function management circuitry 102A of the IPU 104 and the network function management circuitry 102B of the host 116), some examples include a single instance of the network function management circuitry 102 (see dashed instance) that is communicatively connected to both the IPU 104 and the host 116.

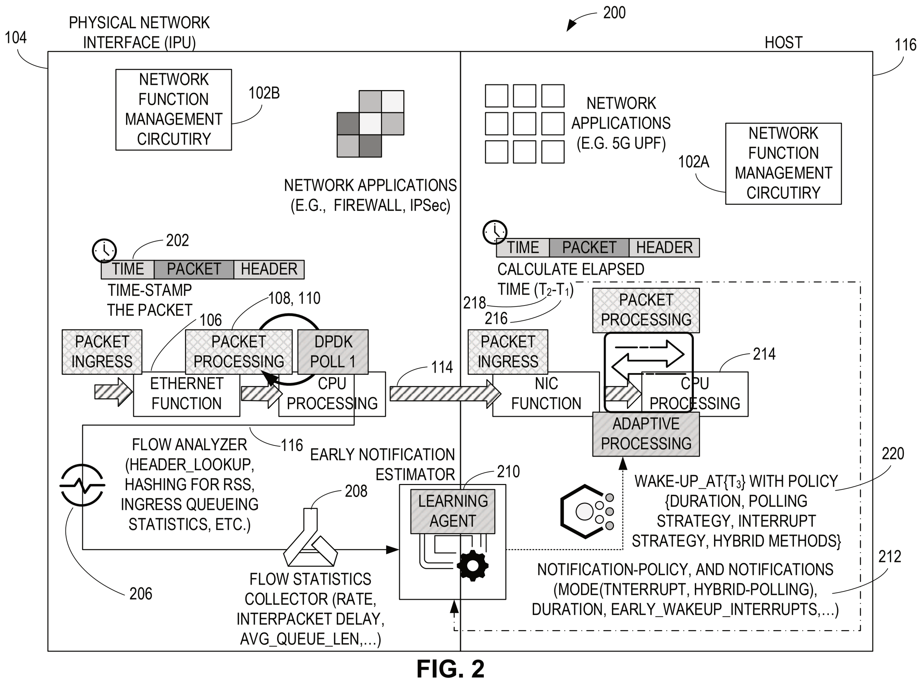

FIG. 2 is a block diagram of an alternate example environment 200 having a nested network function flow between the IPU 104 and the host 116. In the illustrated example of FIG. 2, the IPU 104 includes an example use-case related to network applications, such as a firewall or Internet Protocol (IP) security (IPSec). The example network function management circuitry 102 (or circuitry therein) generates a time-stamp 202 to an incoming packet 204 to the packet ingress stage 106. As described in further detail below, the time-stamp 202 is useful for latency prediction tasks that enable a relatively greater accuracy when predicting an amount of time needed to process the incoming packet 204. In some examples the latency prediction tasks are based on and/or otherwise consider a type of packet, a size of packet (e.g., packet payload), etc. At one or more of the first network function parsing stage 108 or the first network function processing stage 110, the network function management circuitry 102 performs flow analysis 206. In some examples, flow analysis 206 includes parsing and analysis of packet header information, determination of queue length. Additionally, the network function management circuitry 102 performs flow statistics collection 208 that includes, in part, capturing one or more windows of historical values of predicted and observed flow latency values to build statistical confidence intervals for updated latency estimations. For example, in the event that a relatively lower statistical confidence interval is determined, then the network function management circuitry 102 may choose to err on a conservative side when sending notifications to the host 116.

As shown in the illustrated example of FIG. 2, the first network function parsing stage 108 is primarily focused on notifications and/or information used to generate notifications to be transmitted via the notification path 112. In particular, notification generation includes learning estimated times that a host 116 (and/or processing devices of the host) should be awake (e.g., in a polling mode instead of a dormant mode) to process packets sent by the IPU 104. On the other hand, the first network function processing stage 110 is primarily focused on packet processing based on a particular use case (e.g., IPSec) to be transmitted via the data movement path 114. In some examples, packet processing includes general purpose compute tasks, and/or input/output (I/O) based acceleration tasks (e.g., cryptography, IPSec). Once processing is completed by the IPU 104, packets are enqueued for transmission to the host 116 over the data movement path 114 (e.g., with the aid of direct memory access (DMA) circuits/functions at the IPU 104 and host 116).

In the illustrated example of FIG. 2, latency value determinations are aided by a learning agent 210 (e.g., learning circuitry). In some examples the learning agent 210 implements a set of neural-network-based predictors to observe patterns that correlate with observed latecies (e.g., historical delay/latency metric observations). The example learning agent 210 (which may be part of the example network function management circuitry 102) considers any number of factors as input to the neural-network-based predictors, such as a source identifier, a time-of-day (e.g., in view of historical congestion observations), packet header information, traffic flow rates, congestion metrics at particular network locations, etc. Additional parameters provided to the example learning agent 210 include resource utilization information, such as computational burdens of CPUs, memory, internal input/output (I/O) resources, cache miss statistics, resource frequency, etc. In some examples, the learning agent 210 and/or model parameters associated therewith are distributed to different network nodes of a pipeline, thereby facilitating a federated learning policy to populate the one or more nodes of the pipeline.

The example network function management circuitry 102 generates and implements one or more notification policies and/or wake-up policies 212. In some examples, relatively longer latency values are problematic, in which case the network function management circuitry 102 generates relatively lower tolerance guard bands to enforce polling activity more aggressively. On the other hand, in the event relatively longer latency values and/or a possibility that relatively longer latency values could occur is not a problematic aspect of a use-case scenario, alternate guard bands may be enforced to favor power saving modes instead of early-onset polling.

The example host 116 includes computational resources 214, such as one or more cores, processing circuitry, accelerators, etc. The network function management circuitry 102 causes the computational resources 214 to wake up in response to a time metric (e.g., a latency value) associated with the notification signal. In some examples, the network function management circuitry 102 generates a first time stamp (t₁) 216 indicative of an arrival time of the notification signal and a second time stamp (t₂) 218 indicative of an arrival time of the packet data transmitted via the data movement path 114. In some examples, the second time stamp 218 is indicative of a time of arrival of data stored in a host memory. The network function management circuitry 102 calculates a difference between the first time stamp (t1) 216 and the second time stamp (t2) 218 as an elapsed time that may be used by the learning agent 210 to estimate a wake-up time (t3) 220. Additionally, the learning agent 210 uses iterative samples of the wake-up time 220 for reinforcement adjustments based on packet arrival times, thereby improving accuracy as the example environment 200 operates.

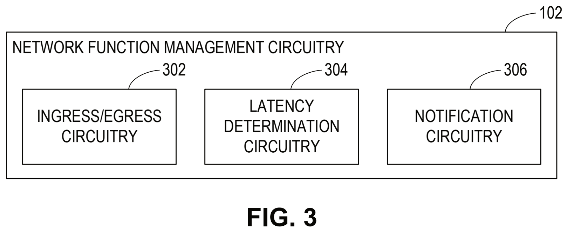

FIG. 3 is a block diagram of the example network function management circuitry 102 of FIGS. 1 and 2. In the illustrated example of FIG. 3, the network function management circuitry 102 includes example ingress/egress circuitry 302, example latency determination circuitry 304, and example notification circuitry 306. In operation, the example ingress/egress circuitry 302 determines whether a packet has been received at the example IPU 104 and, if so, parses the packet to extract information and generate metadata. In some examples the ingress/egress circuitry 302 adds a time stamp to the received packet to allow measurements of how long the IPU 104 takes to process the packet. As described above, packets having different characteristics exhibit different processing duration times. Based on particular packet characteristics and empirical observations on historical processing latencies of the packets, estimated latency values may be determined by examples disclosed herein.

Any received packet is analyzed and processed for at least two different objectives. First, the received packet is analyzed and/or otherwise assessed to determine its characteristics, which provides insight into how long it will take for the packet to be processed by the IPU 104 before being transmitted to the host 116. Second, the received packet is processed by the IPU 104 in a manner that corresponds to its use-case objective, such as IP security packet processing. In some examples, the IPU 104 performs one or more computational tasks on the packet before transmitting it downstream to one or more other nodes of a networked pipeline, which reduces a computational burden on those downstream nodes.

During analysis of a received packet, the example latency determination circuitry 304 determines a latency value to be associated with the packet. In other words, the latency determination circuitry 304 determines and/or otherwise estimates a processing time at the IPU 104 before the processed packet is transmitted to a downstream host 116. In some examples, the latency determination circuitry 304 instantiates the flow analysis 206 described above in connection with FIG. 2 to identify the packet via header analysis and obtain a queue length. In some examples, header information and queue length information is stored in a lookup table (e.g., a data structure stored in a memory circuit) to identify a latency duration to be communicated to a downstream destination (e.g., the host 116). In some examples, the lookup table is updated based on information learned by the example learning agent 210. In some examples, the latency determination circuitry 304 combines information from the flow analysis 206 with information from flow statistics collection 208 as input to the learning agent 210 to generate a latency value corresponding to the packet. For example, the learning agent 210 may operate in an inference mode in which a neural network model has been trained on prior instances of the flow analysis 206 and the flow statistics 208.

The example notification circuitry 306 generates a notification signal based on the received packet and transmits the notification signal to the host 116 prior to completion of packet processing at one or more computing resources of the IPU 104. Stated differently, while a received packet is processed by the IPU 104 at a first time, there is a finite duration associated with such packet processing before it (or a payload generated by tasks performed on the packet) is ready for transmission to the host 116. In known systems, the processed packet is transmitted to a subsequent node (e.g., downstream), at which point the subsequent node begins its own computational tasks on the received packet. To perform such tasks on the received packet in a timely manner (e.g., a manner consistent with service-level-agreement (SLA) metrics), the network functions of the host 116 operate in an energy-demanding polling mode.

To overcome waste associated with downstream nodes operating in the polling mode, examples disclosed herein transmit the notification signal from the IPU 104 to the host 116 with relatively low-bandwidth information while the IPU 104 completes its processing of the packet. The relatively low-bandwidth information generated and transmitted by the example notification circuitry 306 includes, but is not limited to a latency duration value, target device polling frequency instructions, target device power level instructions, and/or one or more microservices request parameters. The example latency duration value informs the downstream host how long it will be before the processed packet is transmitted, which gives the host 116 an opportunity to keep one or more network functions in a dormant state or a reduced frequency polling mode until they are needed. For instance, the notification circuitry 306 may generate polling frequency instructions that cause computational resources of the host 116 to operate from a dormant state to a maximum frequency state, and any intermediate frequency states in between. Accordingly, downstream operating states having a relatively lower core/accelerator frequency result in computational savings, such as reduced power consumption metrics and/or reduced heat generation metrics. On the other hand, in circumstances where improved performance and/or reduced latency is needed with downstream host(s), increased core frequency instructions facilitate such performance boosts, such as circumstances in which workloads and/or payloads increase to a relatively more-demanding condition. In some examples, instructions to increase downstream operational frequencies improve throughput by using parallel processing with SIMD instructions and/or accelerators in connection with batch requests. Additionally, the example microservices request parameters give the host 116 an opportunity to instantiate available microservices and/or containers that are relevant to the processed packets to be received from the IPU 104. For example, if the IPU 104 is processing packets related to IP security, then the notification circuitry 306 may send the notification signal with an IPSec microservices request parameter that enables the host 116 to locate, prepare and instantiate (e.g., "spin-up") one or more containers associated with the requested microservices.

In some examples, the IPU 104, a downstream host 116, and/or one or more subsequent hosts that may operate downstream, implement scalable sharing of input/output (I/O) devices, such as network controllers, storage controllers, GPUs, etc. In some examples, the devices are shared across containers and/or virtual machines. The scalable sharing is sometimes referred to as scalable I/O virtualization (IoV), which facilitates hardware-assisted virtualization models.

In addition to the first objective performed by examples disclosed herein to determine an amount of time needed by the IPU 104 to process an incoming packet, the example network function management circuitry 102 processes the packet to satisfy its use-case objective (e.g., IPSec packet processing). As described above, the IPU 104 includes any number and/or type of processing circuit, CPU, cores and/or accelerators to perform compute tasks, such as cryptography, IP security, etc. When the network function management circuitry 102 determines that a packet processing task is complete, it invokes the latency determination circuitry 304 to determine flow statistics and/or packet processing statistics. For example, the latency determination circuitry 304 generates a time-stamp when the IPU 104 completes processing of the packet, which is compared to the time-stamp 202 that was generated when the IPU 104 first received that packet. This comparison represents a data point indicative of the amount of time taken to perform the packet processing, which is helpful input to the learning agent 210 when refining one or more neural network estimation models. The network function management circuitry 102 transmits the packet (e.g., a payload of the packet processing) to the host 116.

While the above substantially focuses on example tasks performed by the IPU 104 at early stages of packet processing in a multi-node pipeline of network functions, examples disclosed herein facilitate fine-grained control of subsequent node behaviors. From the point of view of the host 116, which includes the network function management circuitry (e.g., 102A), the notification circuitry 306 monitors for receipt of a notification signal and parses the same upon receipt. The latency determination circuitry 304 determines whether the notification signal includes latency information, and if so causes the network function management circuitry 102A to set a network function mode of the host 116. For example, if one or more network functions of the host 116 is in a polling mode, but there are no packets to be processed, the network function management circuitry 102A sets the network function to a dormant mode, thereby conserving power and reducing heat generation. Stated differently, the network function management circuitry 102A blocks and/or disables a default polling mode of the host 116 to reduce computational waste.

The example notification circuitry 306 also evaluates and/or otherwise parses the received notification signal to determine if one or more resource requests are included. As described above, resource requests may include microservice requests (e.g., decryption microservice requests) or requests to utilize specialized computational resources (e.g., accelerators). Based on the requested resources contained within and/or otherwise embedded in the notification signal, the network function management circuitry 102A prepares the requested resources for activation in a manner consistent with received latency information. Stated differently, rather than immediately instantiating requested resources identified in the notification signal, the network function management circuitry 102A schedules the requested resources to be available after an identified latency duration has elapsed, thereby preventing wasted power consumption by spooling-up the resources before there is any packet data to be processed.

In some examples, the notification circuitry 306 returns an acknowledgement signal back to the IPU 104 to inform it that the host 116 is ready for the processed packets. In some examples in which the IPU 104 is structured to refrain from sending processed packets until a memory buffer of the host 116 is ready, the acknowledgement signal sent by the host 116 to the IPU 104 reduces pipeline latency.

While the illustrated examples of FIGS. 1 and 2 identify one originating node (e.g., the IPU 104) of the environment and one subsequent node (e.g., the host 116) of the environment, the pipeline examples of FIGS. 1 and 2 are not limited to a single subsequent node. In some examples, the notification circuitry 306 determines whether one or more downstream nodes associated with the network functions are available. If so, then examples disclosed herein prepare one or more notification signals to the one or more additional subsequent nodes of any pipeline.

FIG. 3 is a block diagram of an example implementation of the network function management circuitry 102 of FIG. 1 to do notification management. The network function management circuitry 102 of FIG. 3 may be instantiated (e.g., creating an instance of, bring into being for any length of time, materialize, implement, etc.) by programmable circuitry such as a Central Processor Unit (CPU) executing first instructions. Additionally or alternatively, the network function management circuitry 102 of FIG. 3 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 3 may, thus, be instantiated at the same or different times. Some or all of the circuitry of FIG. 3 may be instantiated, for example, in one or more threads executing concurrently on hardware and/or in series on hardware. Moreover, in some examples, some or all of the circuitry of FIG. 3 may be implemented by microprocessor circuitry executing instructions and/or FPGA circuitry performing operations to implement one or more virtual machines and/or containers.

In some examples, the ingress/egress circuitry 302 is instantiated by programmable circuitry executing ingress/egress instructions and/or configured to perform operations such as those represented by the flowchart(s) of FIGS. 4-5. In some examples, the latency determination circuitry 304 is instantiated by programmable circuitry executing latency determination instructions and/or configured to perform operations such as those represented by the flowchart(s) of FIGS. 4-5. In some examples, the notification circuitry 306 is instantiated by programmable circuitry executing notification instructions and/or configured to perform operations such as those represented by the flowchart(s) of FIGS. 4-5. In some examples, the network function management circuitry 102 is instantiated by programmable circuitry executing network function management instructions and/or configured to perform operations such as those represented by the flowchart(s) of FIGS. 4-5.

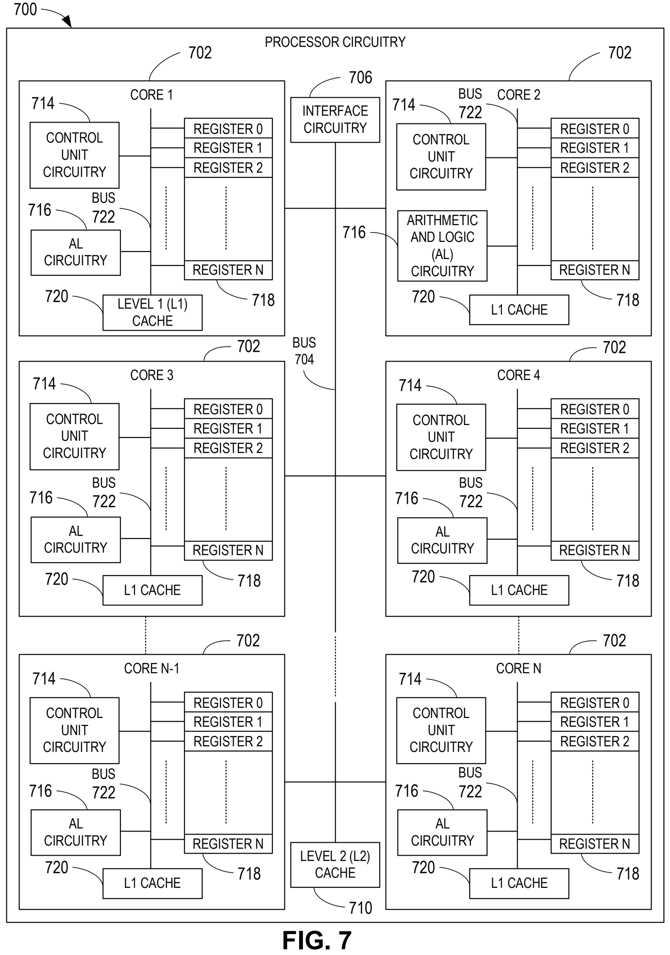

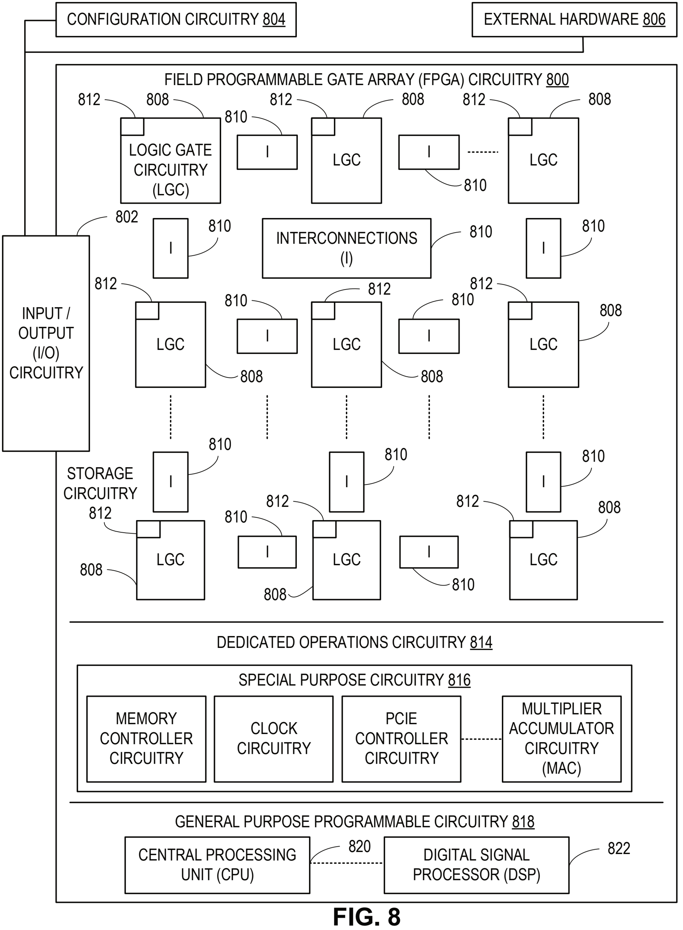

In some examples, the ingress/egress circuitry 302 includes means for ingress/egress. For example, the means for ingress/egress may be implemented by ingress/egress circuitry 302. In some examples, the latency determination circuitry 304 includes means for latency determination. For example, the means for latency determination may be implemented by the latency determination circuitry 304. In some examples, the notification circuitry 306 includes means for notification. For example, the means for notification may be implemented by the notification circuitry 306. In some examples, the network function management circuitry 102 includes means for network function management. For example, the means for network function management may be implemented by the network function management circuitry 102. For instance, the aforementioned circuitry may be instantiated by the example microprocessor 700 of FIG. 7 executing machine executable instructions such as those implemented by at least the blocks of FIGS. 4-5. In some examples, the aforementioned circuitry may be instantiated by hardware logic circuitry, which may be implemented by an ASIC, XPU, or the FPGA circuitry 800 of FIG. 8 configured and/or structured to perform operations corresponding to the machine-readable instructions. Additionally or alternatively, the aforementioned circuitry may be instantiated by any other combination of hardware, software, and/or firmware. For example, the aforementioned circuitry may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

While an example manner of implementing the network function management circuitry 102 of FIG. 1 is illustrated in FIG. 3, one or more of the elements, processes, and/or devices illustrated in FIG. 3 may be combined, divided, re-arranged, omitted, eliminated, and/or implemented in any other way. Further, the example ingress/egress circuitry 302, the example latency determination circuitry 304, the example notification circuitry 306, and/or, more generally, the example network function management circuitry 102 of FIG. 3, may be implemented by hardware alone or by hardware in combination with software and/or firmware. Thus, for example, any of the example ingress/egress circuitry 302, the example latency determination circuitry 304, the example notification circuitry 306, and/or, more generally, the example network function management circuitry 102, could be implemented by programmable circuitry in combination with machine-readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example network function management circuitry 102 of FIG. 3 may include one or more elements, processes, and/or devices in addition to, or instead of, those illustrated in FIG. 3, and/or may include more than one of any or all of the illustrated elements, processes and devices.

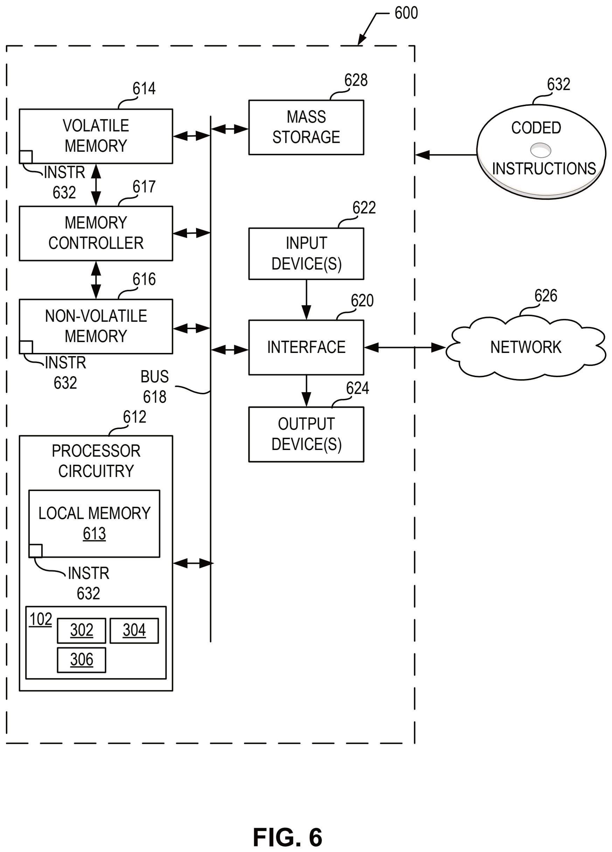

Flowchart(s) representative of example machine-readable instructions, which may be executed by programmable circuitry to implement and/or instantiate the network function management circuitry 102 of FIG. 3 and/or representative of example operations which may be performed by programmable circuitry to implement and/or instantiate the network function management circuitry 102 of FIG. 3, are shown in FIGS. 4-5. The machine-readable instructions may be one or more executable programs or portion(s) of one or more executable programs for execution by programmable circuitry such as the programmable circuitry 612 shown in the example processor platform 600 discussed below in connection with FIG. 6 and/or may be one or more function(s) or portion(s) of functions to be performed by the example programmable circuitry (e.g., an FPGA) discussed below in connection with FIGS. 7 and/or 8. In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 4-5, many other methods of implementing the example network function management circuitry 102 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine-readable instructions may be fragmented and stored on one or more storage devices, disks and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine-readable, computer readable and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 4-5 may be implemented using executable instructions (e.g., computer readable and/or machine-readable instructions) stored on one or more non-transitory computer readable and/or machine-readable media. As used herein, the terms non-transitory computer readable medium, non-transitory computer readable storage medium, non-transitory machine-readable medium, and/or non-transitory machine-readable storage medium are expressly defined to include any type of computer readable storage device and/or storage disk and to exclude propagating signals and to exclude transmission media. Examples of such non-transitory computer readable medium, non-transitory computer readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine-readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine-readable instructions, etc., and/or manufactured to execute computer-readable instructions, machine-readable instructions, etc.

FIG. 4 is a flowchart representative of example machine-readable instructions and/or example operations 400 that may be executed, instantiated, and/or performed by programmable circuitry to generate a network notification to be sent to one or more devices (e.g., devices downstream to the IPU 104, such as the host 116). The example machine-readable instructions and/or the example operations 400 of FIG. 4 begin at block 402, at which the ingress/egress circuitry 302 receives a packet to be processed and parses the packet to extract content information (block 404). The ingress/egress circuitry 302 analyzes the extracted content information to determine packet characteristics (block 406), such as packet header information, queue length information, payload size information, packet type information (e.g., plaintext or enciphered), packet task instructions, etc.

The example latency determination circuitry 304 determines a packet latency metric (block 408) based on different factors, including the results of the packet analysis of block 406. Generally speaking, certain types of packets and/or packet processing tasks consume varying amounts of time to be completed, which is considered by the latency determination circuitry 304 when determining an expected packet latency value (block 408). Some example factors processed by the example latency determination circuitry 304 include an identified queue length, a type of packet, a type of packet operation(s) to be performed before sending a payload to one or more destinations, historical information (e.g., empirical latency metrics associated with previously processed packets of a same/similar type), and/or modeling results. In some examples, collected flow statistics 208 are modeled by the example learning agent 210 (e.g., a neural network model) to generate latency metrics. In some examples, and as described above, the latency determination circuitry 304 generates a time-stamp when the IPU 104 completes processing of the packet that is compared to a time-stamp 202 that was generated when the IPU 104 first received the packet. These latency metrics are used by the learning agent 210 to improve prediction accuracy when determining packet latency (block 408).

The example notification circuitry 306 generates a notification signal (block 410) to one or more downstream devices (e.g., the host 116) while the packet is still being processed by the IPU 104. Stated differently, the notification circuitry 306 generates a "heads-up" notification signal and transmits the same (block 412) to downstream devices so that they may prepare for a future payload with an indication of how long it will take before that payload is either transmitted by the IPU 104 or received by the host 116.

In the illustrated example of FIG. 4, while the ingress/egress circuitry 302 is analyzing packet characteristics (block 406), the network function management circuitry 102 invokes one or more resources of the IPU 104 to process the packet (block 414). The network function management circuitry 102 determines if a payload is ready to be transmitted (block 416) based on whether packet processing is complete. After the network function management circuitry 102 determines the packet processing is complete (block 416), the latency determination circuitry 304 determines flow statistics (block 418). As described above, some packets consume varying amounts of time to complete based on any number of factors, and the latency determination circuitry 304 cultivates metrics associated with packet performance, such as recording a start time-stamp when the IPU 104 begins packet processing and a stop time-stamp when the IPU 104 completes packet processing (block 418).

The network function management circuitry 102 transmits the payload to a target processing circuit (block 420), such as the example host 116. The latency determination circuitry 304 provides any cultivated/collected flow statistics to one or more learning models (block 422), such as to the learning agent 210, which permits further learning as data samples accumulate over time.

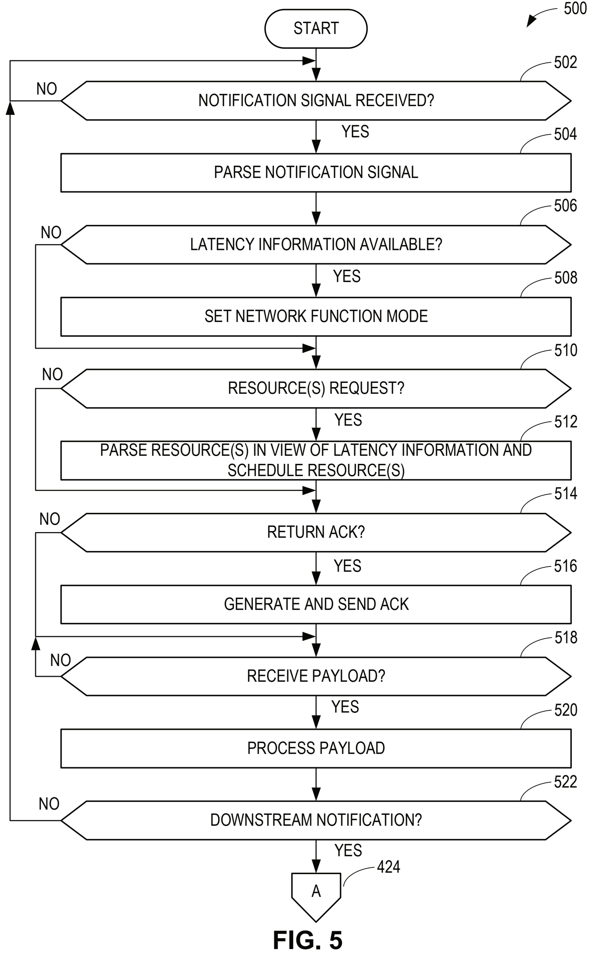

FIG. 5 is a flowchart representative of example machine-readable instructions and/or example operations 500 that may be executed, instantiated, and/or performed by programmable circuitry to process a received notification from one or more upstream devices of the example environment 100. The example machine-readable instructions and/or the example operations 500 of FIG. 5 begin at block 502, at which the notification circuitry 306 determines whether a notification signal has been received. If so, the notification circuitry 306 parses the notification signal (block 504) and the latency determination circuitry 304 determines whether it contains latency information (block 506). As described above, the notification signal may include (e.g., embedded metadata) latency information in the form of a latency value (e.g., a number of milliseconds before a payload is expected to be transmitted to the host 116, a time-stamp of expected arrival, etc.) that can allow the host 116 to perform in a more efficient manner. For example, based on the latency information, the network function management circuitry 102 sets a network function mode of the target computing device (e.g., the host 116) (block 508). In some examples, the network function management circuitry 102 sets the network function mode to operate in a dormant mode when a threshold latency value is received, which permits the target device to conserve energy until a duration of the received latency value expires. However, in some examples, the network function management circuitry 102 sets the network function mode to operate in a polling mode when a threshold latency value is received, such as a latency value indicative of payload data being imminently received. For instance, if the target device (e.g., the host 116) was previously in a dormant mode, then the network function management circuitry 102 sets the function mode to active or polling to make sure it is ready to receive and process incoming payload data.

The example notification circuitry 306 determines whether the notification signal includes one or more resource requests (block 510). For example, metadata embedded in the notification signal may identify one or more microservices to be executed on the target device(s). If so, the network function management circuitry 102 prepares, schedules and/or otherwise instantiates the identified resource requests in view of the latency information (block 512). For example, a first requested microservice may require 60 milliseconds to initialize, but the latency information may indicate that the payload will not arrive for another 100 milliseconds. As such, the example network function management circuitry 102 schedules the requested microservice to begin its initialization task(s) in 40 milliseconds to balance energy conservation with task readiness.

The example notification circuitry 306 determines whether to send an acknowledgement signal (block 514). For instance, if a memory buffer of the host 116 is ready for receipt of additional data, the notification circuitry 306 may generate and send the acknowledgement (ACK) signal (block 516) to the sender (e.g., the host 104). The network function management circuitry 102 determines whether the payload has been received (block 518) and, if so, processes the payload (block 520) using available computing resources (e.g., memory, processing cores, spooled-up microservices, etc.). Control returns to block 502, where the example notification circuitry 306 determines if another notification signal is received. However, if the notification circuitry 306 is to propagate and/or otherwise provide downstream devices with notification signal(s) (block 522), then control advances to block 424 of FIG. 4.

FIG. 6 is a block diagram of an example programmable circuitry platform 600 structured to execute and/or instantiate the example machine-readable instructions and/or the example operations of FIGS. 4-5 to implement the network function management circuitry 102 of FIG. 3. The programmable circuitry platform 600 can be, for example, a server, a personal computer, a workstation, a self-learning machine (e.g., a neural network), a mobile device (e.g., a cell phone, a smart phone, a tablet such as an iPad^{™}), a gaming console, a set top box, a headset (e.g., an augmented reality (AR) headset, a virtual reality (VR) headset, etc.) or other wearable device, or any other type of computing and/or electronic device.

The programmable circuitry platform 600 of the illustrated example includes programmable circuitry 612. The programmable circuitry 612 of the illustrated example is hardware. For example, the programmable circuitry 612 can be implemented by one or more integrated circuits, logic circuits, FPGAs, microprocessors, CPUs, GPUs, DSPs, and/or microcontrollers from any desired family or manufacturer. The programmable circuitry 612 may be implemented by one or more semiconductor based (e.g., silicon based) devices. In this example, the programmable circuitry 612 implements the example ingress/egress circuitry 302, the example latency determination circuitry 304, the example notification circuitry 306, and the example network function management circuitry 102.

The programmable circuitry 612 of the illustrated example includes a local memory 613 (e.g., a cache, registers, etc.). The programmable circuitry 612 of the illustrated example is in communication with main memory 614, 616, which includes a volatile memory 614 and a non-volatile memory 616, by a bus 618. The volatile memory 614 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 616 may be implemented by flash memory and/or any other desired type of memory device. Access to the main memory 614, 616 of the illustrated example is controlled by a memory controller 617. In some examples, the memory controller 617 may be implemented by one or more integrated circuits, logic circuits, microcontrollers from any desired family or manufacturer, or any other type of circuitry to manage the flow of data going to and from the main memory 614, 616.

The programmable circuitry platform 600 of the illustrated example also includes interface circuitry 620. The interface circuitry 620 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 622 are connected to the interface circuitry 620. The input device(s) 622 permit(s) a user (e.g., a human user, a machine user, etc.) to enter data and/or commands into the programmable circuitry 612. The input device(s) 622 can be implemented by, for example, an audio sensor, a microphone, a camera (still or video), a keyboard, a button, a mouse, a touchscreen, a trackpad, a trackball, an isopoint device, and/or a voice recognition system.

One or more output devices 624 are also connected to the interface circuitry 620 of the illustrated example. The output device(s) 624 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 620 of the illustrated example, thus, typically includes a graphics driver card, a graphics driver chip, and/or graphics processor circuitry such as a GPU.

The interface circuitry 620 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 626. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 600 of the illustrated example also includes one or more mass storage discs or devices 628 to store firmware, software, and/or data. Examples of such mass storage discs or devices 628 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 632, which may be implemented by the machine-readable instructions of FIGS. 4-5, may be stored in the mass storage device 628, in the volatile memory 614, in the non-volatile memory 616, and/or on at least one non-transitory computer readable storage medium such as a CD or DVD which may be removable.

FIG. 7 is a block diagram of an example implementation of the programmable circuitry 612 of FIG. 6. In this example, the programmable circuitry 612 of FIG. 6 is implemented by a microprocessor 700. For example, the microprocessor 700 may be a general-purpose microprocessor (e.g., general-purpose microprocessor circuitry). The microprocessor 700 executes some or all of the machine-readable instructions of the flowcharts of FIGS. 4-5 to effectively instantiate the circuitry of FIG. 3 as logic circuits to perform operations corresponding to those machine-readable instructions. In some such examples, the circuitry of FIG. 3 is instantiated by the hardware circuits of the microprocessor 700 in combination with the machine-readable instructions. For example, the microprocessor 700 may be implemented by multi-core hardware circuitry such as a CPU, a DSP, a GPU, an XPU, etc. Although it may include any number of example cores 702 (e.g., 1 core), the microprocessor 700 of this example is a multi-core semiconductor device including N cores. The cores 702 of the microprocessor 700 may operate independently or may cooperate to execute machine-readable instructions. For example, machine code corresponding to a firmware program, an embedded software program, or a software program may be executed by one of the cores 702 or may be executed by multiple ones of the cores 702 at the same or different times. In some examples, the machine code corresponding to the firmware program, the embedded software program, or the software program is split into threads and executed in parallel by two or more of the cores 702. The software program may correspond to a portion or all of the machine-readable instructions and/or operations represented by the flowcharts of FIGS. 4-5.

The cores 702 may communicate by a first example bus 704. In some examples, the first bus 704 may be implemented by a communication bus to effectuate communication associated with one(s) of the cores 702. For example, the first bus 704 may be implemented by at least one of an Inter-Integrated Circuit (I2C) bus, a Serial Peripheral Interface (SPI) bus, a PCI bus, or a PCIe bus. Additionally or alternatively, the first bus 704 may be implemented by any other type of computing or electrical bus. The cores 702 may obtain data, instructions, and/or signals from one or more external devices by example interface circuitry 706. The cores 702 may output data, instructions, and/or signals to the one or more external devices by the interface circuitry 706. Although the cores 702 of this example include example local memory 720 (e.g., Level 1 (L1) cache that may be split into an L1 data cache and an L1 instruction cache), the microprocessor 700 also includes example shared memory 710 that may be shared by the cores (e.g., Level 2 (L2 cache)) for high-speed access to data and/or instructions. Data and/or instructions may be transferred (e.g., shared) by writing to and/or reading from the shared memory 710. The local memory 720 of each of the cores 702 and the shared memory 710 may be part of a hierarchy of storage devices including multiple levels of cache memory and the main memory (e.g., the main memory 614, 616 of FIG. 6). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 702 may be referred to as a CPU, DSP, GPU, etc., or any other type of hardware circuitry. Each core 702 includes control unit circuitry 714, arithmetic and logic (AL) circuitry (sometimes referred to as an ALU) 716, a plurality of registers 718, the local memory 720, and a second example bus 722. Other structures may be present. For example, each core 702 may include vector unit circuitry, single instruction multiple data (SIMD) unit circuitry, load/store unit (LSU) circuitry, branch/jump unit circuitry, floating-point unit (FPU) circuitry, etc. The control unit circuitry 714 includes semiconductor-based circuits structured to control (e.g., coordinate) data movement within the corresponding core 702. The AL circuitry 716 includes semiconductor-based circuits structured to perform one or more mathematic and/or logic operations on the data within the corresponding core 702. The AL circuitry 716 of some examples performs integer based operations. In other examples, the AL circuitry 716 also performs floating-point operations. In yet other examples, the AL circuitry 716 may include first AL circuitry that performs integer-based operations and second AL circuitry that performs floating-point operations. In some examples, the AL circuitry 716 may be referred to as an Arithmetic Logic Unit (ALU).

The registers 718 are semiconductor-based structures to store data and/or instructions such as results of one or more of the operations performed by the AL circuitry 716 of the corresponding core 702. For example, the registers 718 may include vector register(s), SIMD register(s), general-purpose register(s), flag register(s), segment register(s), machine-specific register(s), instruction pointer register(s), control register(s), debug register(s), memory management register(s), machine check register(s), etc. The registers 718 may be arranged in a bank as shown in FIG. 7. Alternatively, the registers 718 may be organized in any other arrangement, format, or structure, such as by being distributed throughout the core 702 to shorten access time. The second bus 722 may be implemented by at least one of an I2C bus, a SPI bus, a PCI bus, or a PCIe bus.

Each core 702 and/or, more generally, the microprocessor 700 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 700 is a semiconductor device fabricated to include many transistors interconnected to implement the structures described above in one or more integrated circuits (ICs) contained in one or more packages.

The microprocessor 700 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 700, in the same chip package as the microprocessor 700 and/or in one or more separate packages from the microprocessor 700.

FIG. 8 is a block diagram of another example implementation of the programmable circuitry 612 of FIG. 6. In this example, the programmable circuitry 612 is implemented by FPGA circuitry 800. For example, the FPGA circuitry 800 may be implemented by an FPGA. The FPGA circuitry 800 can be used, for example, to perform operations that could otherwise be performed by the example microprocessor 700 of FIG. 7 executing corresponding machine-readable instructions. However, once configured, the FPGA circuitry 800 instantiates the operations and/or functions corresponding to the machine-readable instructions in hardware and, thus, can often execute the operations/functions faster than they could be performed by a general-purpose microprocessor executing the corresponding software.

More specifically, in contrast to the microprocessor 700 of FIG. 7 described above (which is a general purpose device that may be programmed to execute some or all of the machine-readable instructions represented by the flowchart(s) of FIGS. 4-5 but whose interconnections and logic circuitry are fixed once fabricated), the FPGA circuitry 800 of the example of FIG. 8 includes interconnections and logic circuitry that may be configured, structured, programmed, and/or interconnected in different ways after fabrication to instantiate, for example, some or all of the operations/functions corresponding to the machine-readable instructions represented by the flowchart(s) of FIGS. 4-5. In particular, the FPGA circuitry 800 may be thought of as an array of logic gates, interconnections, and switches. The switches can be programmed to change how the logic gates are interconnected by the interconnections, effectively forming one or more dedicated logic circuits (unless and until the FPGA circuitry 800 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 4-5. As such, the FPGA circuitry 800 may be configured and/or structured to effectively instantiate some or all of the operations/functions corresponding to the machine-readable instructions of the flowchart(s) of FIGS. 4-5 as dedicated logic circuits to perform the operations/functions corresponding to those software instructions in a dedicated manner analogous to an ASIC. Therefore, the FPGA circuitry 800 may perform the operations/functions corresponding to the some or all of the machine-readable instructions of FIGS. 4-5 faster than the general-purpose microprocessor can execute the same.

In the example of FIG. 8, the FPGA circuitry 800 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 800 of FIG. 8 may access and/or load the binary file to cause the FPGA circuitry 800 of FIG. 8 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 800 of FIG. 8 to cause configuration and/or structuring of the FPGA circuitry 800 of FIG. 8, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 800 of FIG. 8 may access and/or load the binary file to cause the FPGA circuitry 800 of FIG. 8 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 800 of FIG. 8 to cause configuration and/or structuring of the FPGA circuitry 800 of FIG. 8, or portion(s) thereof.

The FPGA circuitry 800 of FIG. 8, includes example input/output (I/O) circuitry 802 to obtain and/or output data to/from example configuration circuitry 804 and/or external hardware 806. For example, the configuration circuitry 804 may be implemented by interface circuitry that may obtain a binary file, which may be implemented by a bit stream, data, and/or machine-readable instructions, to configure the FPGA circuitry 800, or portion(s) thereof. In some such examples, the configuration circuitry 804 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 806 may be implemented by external hardware circuitry. For example, the external hardware 806 may be implemented by the microprocessor 700 of FIG. 7.

The FPGA circuitry 800 also includes an array of example logic gate circuitry 808, a plurality of example configurable interconnections 810, and example storage circuitry 812. The logic gate circuitry 808 and the configurable interconnections 810 are configurable to instantiate one or more operations/functions that may correspond to at least some of the machine-readable instructions of FIGS. 4-5 and/or other desired operations. The logic gate circuitry 808 shown in FIG. 8 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 808 to enable configuration of the electrical structures and/or the logic gates to form circuits to perform desired operations/functions. The logic gate circuitry 808 may include other electrical structures such as look-up tables (LUTs), registers (e.g., flip-flops or latches), multiplexers, etc.

The configurable interconnections 810 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 808 to program desired logic circuits.

The storage circuitry 812 of the illustrated example is structured to store result(s) of the one or more of the operations performed by corresponding logic gates. The storage circuitry 812 may be implemented by registers or the like. In the illustrated example, the storage circuitry 812 is distributed amongst the logic gate circuitry 808 to facilitate access and increase execution speed.

The example FPGA circuitry 800 of FIG. 8 also includes example dedicated operations circuitry 814. In this example, the dedicated operations circuitry 814 includes special purpose circuitry 816 that may be invoked to implement commonly used functions to avoid the need to program those functions in the field. Examples of such special purpose circuitry 816 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 800 may also include example general purpose programmable circuitry 818 such as an example CPU 820 and/or an example DSP 822. Other general purpose programmable circuitry 818 may additionally or alternatively be present such as a GPU, an XPU, etc., that can be programmed to perform other operations.

Although FIGS. 7 and 8 illustrate two example implementations of the programmable circuitry 612 of FIG. 6, many other approaches are contemplated. For example, FPGA circuitry may include an on-board CPU, such as one or more of the example CPU 820 of FIG. 7. Therefore, the programmable circuitry 612 of FIG. 6 may additionally be implemented by combining at least the example microprocessor 700 of FIG. 7 and the example FPGA circuitry 800 of FIG. 8. In some such hybrid examples, one or more cores 702 of FIG. 7 may execute a first portion of the machine-readable instructions represented by the flowchart(s) of FIGS. 4-5 to perform first operation(s)/function(s), the FPGA circuitry 800 of FIG. 8 may be configured and/or structured to perform second operation(s)/function(s) corresponding to a second portion of the machine-readable instructions represented by the flowcharts of FIGS. 4-5, and/or an ASIC may be configured and/or structured to perform third operation(s)/function(s) corresponding to a third portion of the machine-readable instructions represented by the flowcharts of FIGS. 4-5.

It should be understood that some or all of the circuitry of FIG. 3 may, thus, be instantiated at the same or different times. For example, same and/or different portion(s) of the microprocessor 700 of FIG. 7 may be programmed to execute portion(s) of machine-readable instructions at the same and/or different times. In some examples, same and/or different portion(s) of the FPGA circuitry 800 of FIG. 8 may be configured and/or structured to perform operations/functions corresponding to portion(s) of machine-readable instructions at the same and/or different times.

In some examples, some or all of the circuitry of FIG. 3 may be instantiated, for example, in one or more threads executing concurrently and/or in series. For example, the microprocessor 700 of FIG. 7 may execute machine-readable instructions in one or more threads executing concurrently and/or in series. In some examples, the FPGA circuitry 800 of FIG. 8 may be configured and/or structured to carry out operations/functions concurrently and/or in series. Moreover, in some examples, some or all of the circuitry of FIG. 3 may be implemented within one or more virtual machines and/or containers executing on the microprocessor 700 of FIG. 7.

In some examples, the programmable circuitry 612 of FIG. 6 may be in one or more packages. For example, the microprocessor 700 of FIG. 7 and/or the FPGA circuitry 800 of FIG. 8 may be in one or more packages. In some examples, an XPU may be implemented by the programmable circuitry 612 of FIG. 6, which may be in one or more packages. For example, the XPU may include a CPU (e.g., the microprocessor 700 of FIG. 7, the CPU 820 of FIG. 8, etc.) in one package, a DSP (e.g., the DSP 822 of FIG. 8) in another package, a GPU in yet another package, and an FPGA (e.g., the FPGA circuitry 800 of FIG. 8) in still yet another package.

A block diagram illustrating an example software distribution platform 905 to distribute software such as the example machine-readable instructions 632 of FIG. 6 to other hardware devices (e.g., hardware devices owned and/or operated by third parties from the owner and/or operator of the software distribution platform) is illustrated in FIG. 9. The example software distribution platform 905 may be implemented by any computer server, data facility, cloud service, etc., capable of storing and transmitting software to other computing devices. The third parties may be customers of the entity owning and/or operating the software distribution platform 905. For example, the entity that owns and/or operates the software distribution platform 905 may be a developer, a seller, and/or a licensor of software such as the example machine-readable instructions 632 of FIG. 6. The third parties may be consumers, users, retailers, OEMs, etc., who purchase and/or license the software for use and/or re-sale and/or sub-licensing. In the illustrated example, the software distribution platform 905 includes one or more servers and one or more storage devices. The storage devices store the machine-readable instructions 632, which may correspond to the example machine-readable instructions of FIGS. 4-5, as described above. The one or more servers of the example software distribution platform 905 are in communication with an example network 910, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine-readable instructions 632 from the software distribution platform 905. For example, the software, which may correspond to the example machine-readable instructions of FIGS. 4-5, may be downloaded to the example programmable circuitry platform 600, which is to execute the machine-readable instructions 632 to implement the network function management circuitry 102. In some examples, one or more servers of the software distribution platform 905 periodically offer, transmit, and/or force updates to the software (e.g., the example machine-readable instructions 632 of FIG. 6) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time +/- 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that generate and transmit low-bandwidth notifications to one or more downstream devices in a network that permit such downstream devices to operate in a more efficient manner. Examples disclosed herein permit downstream devices to stay in a dormant or low-polling rate mode when packet data is not ready to be processed by such downstream devices. As such, energy intensive high-bandwidth modes do not need to operate as a default safeguard so that the downstream devices are ready for data processing. Examples disclosed herein also generate the low-bandwidth notifications in a manner that gives the downstream devices a "heads-up" that one or more services will be requested in the future. As such, examples disclosed herein permit the downstream devices to get ready and/or otherwise prepare to spool-up such services (e.g., microservices) so that they may operate "just-in-time" for the receipt of packet data.. Accordingly, disclosed systems, apparatus, articles of manufacture, and methods improve the efficiency of using a computing device by preventing the waste associated with default high-polling rates of known network device coordination. Disclosed systems, apparatus, articles of manufacture, and methods are accordingly directed to one or more improvement(s) in the operation of a machine such as a computer or other electronic and/or mechanical device.

Example methods, apparatus, systems, and articles of manufacture to manage network notifications are disclosed herein. Further examples and combinations thereof include the following:
Example 1 includes an apparatus comprising interface circuitry, machine-readable instructions, and at least one processor circuit to be programmed by the machine-readable instructions to cause transmission of a first signal based on a packet, the first signal including characteristics of the packet, and cause transmission of a second signal after the first signal, the second signal including a payload of the packet.
Example 2 includes the apparatus as defined in example 1, wherein one or more of the at least one processor circuit is to generate the first signal with a microservice instantiation request.
Example 3 includes the apparatus as defined in example 2, wherein the microservice instantiation request is based on a type of the packet.
Example 4 includes the apparatus as defined in example 3, wherein the type of the packet includes at least one of encrypted or plaintext.
Example 5 includes the apparatus as defined in example 2, wherein one or more of the at least one processor circuit is to generate the microservice instantiation request as a decryption microservice based on a type of the packet.
Example 6 includes the apparatus as defined in example 1, wherein one or more of the at least one processor circuit is to instantiate a first nested network function on the packet at a first time, and cause a second nested network function to execute on the packet at a second time after the first time.
Example 7 includes the apparatus as defined in example 6, wherein one or more of the at least one processor circuit is to instantiate the first nested network function as at least one of a data plane development kit (DPDK) function, an OpenDataPlane (ODP) function or an Express Data Path (XDP) function.
Example 8 includes the apparatus as defined in example 6, wherein one or more of the at least one processor circuit is to determine the second time based on an egress latency value associated with a first processor circuit.
Example 9 includes the apparatus as defined in example 8, wherein one or more of the at least one processor circuit is to cause the second nested network function to instantiate a polling operation after a duration of the egress latency value.
Example 10 includes the apparatus as defined in example 1, wherein one or more of the at least one processor circuit is to cause the payload to be transmitted to a target processing circuit.
Example 11 includes At least one non-transitory machine-readable medium comprising machine-readable instructions to cause at least one processor circuit to at least transmit a first signal based on a packet, the first signal including characteristics of the packet, and transmit a second signal after the first signal, the second signal including a payload of the packet.
Example 12 includes the at least one non-transitory machine-readable medium as defined in example 11, wherein the machine-readable instructions are to cause one or more of the at least one processor circuit to generate the first signal with a microservice instantiation request.
Example 13 includes the at least one non-transitory machine-readable medium as defined in example 12, wherein the microservice instantiation request is based on a type of the packet.
Example 14 includes the at least one non-transitory machine-readable medium as defined in example 13, wherein the type of the packet includes at least one of encrypted or plaintext.
Example 15 includes the at least one non-transitory machine-readable medium as defined in example 12, wherein the machine-readable instructions are to cause one or more of the at least one processor circuit to generate the microservice instantiation request as a decryption microservice based on a type of the packet.
Example 16 includes the at least one non-transitory machine-readable medium as defined in example 11, wherein the machine-readable instructions are to cause one or more of the at least one processor circuit to instantiate a first nested network function on the packet at a first time, and cause a second nested network function to execute on the packet at a second time after the first time.
Example 17 includes the at least one non-transitory machine-readable medium as defined in example 16, wherein the machine-readable instructions are to cause one or more of the at least one processor circuit to instantiate the first nested network function as at least one of a data plane development kit (DPDK) function, an OpenDataPlane (ODP) function or an Express Data Path (XDP) function.
Example 18 includes the at least one non-transitory machine-readable medium as defined in example 16, wherein the machine-readable instructions are to cause one or more of the at least one processor circuit to determine the second time based on an egress latency value associated with a first processor circuit.
Example 19 includes the at least one non-transitory machine-readable medium as defined in example 18, wherein the machine-readable instructions are to cause one or more of the at least one processor circuit to cause the second nested network function to instantiate a polling operation after a duration of the egress latency value.
Example 20 includes the at least one non-transitory machine-readable medium as defined in example 11, wherein the machine-readable instructions are to cause one or more of the at least one processor circuit to transmit the payload to a target processing circuit.
Example 21 includes a method comprising causing transmission, by at least one processor circuit programmed by at least one instruction, of a first signal based on a packet, the first signal including characteristics of the packet, and causing transmission, by one or more of the at least one processor circuit, of a second signal after the first signal, the second signal including a payload of the packet.
Example 22 includes the method as defined in example 21, further including generating the first signal with a microservice instantiation request.
Example 23 includes the method as defined in example 22, wherein the microservice instantiation request is based on a type of the packet.
Example 24 includes the method as defined in example 23, wherein the type of the packet includes at least one of encrypted or plaintext.
Example 25 includes the method as defined in example 22, further including generating the microservice instantiation request as a decryption microservice based on a type of the packet.
Example 26 includes the method as defined in example 21, further including instantiating a first nested network function on the packet at a first time, and causing a second nested network function to be instantiated on the packet at a second time after the first time.
Example 27 includes the method as defined in example 26, further including instantiating the first nested network function as at least one of a data plane development kit (DPDK) function, an OpenDataPlane (ODP) function or an Express Data Path (XDP) function.
Example 28 includes the method as defined in example 26, further including determining the second time based on an egress latency value associated with a first processor circuit.
Example 29 includes the method as defined in example 28, further including causing the second nested network function to instantiate a polling operation after a duration of the egress latency value.
Example 30 includes the method as defined in example 21, further including causing the payload to be transmitted to a target processing circuit.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus comprising:
interface circuitry;
machine-readable instructions; and
at least one processor circuit to be programmed by the machine-readable instructions to:
cause transmission of a first signal based on a packet, the first signal including characteristics of the packet; and
cause transmission of a second signal after the first signal, the second signal including a payload of the packet.

2. The apparatus as defined in claim 1, wherein one or more of the at least one processor circuit is to generate the first signal with a microservice instantiation request.

3. The apparatus as defined in claim 2, wherein the microservice instantiation request is based on a type of the packet.

4. The apparatus as defined in claim 3, wherein the type of the packet includes at least one of encrypted or plaintext.

5. The apparatus as defined in any preceding claim, wherein one or more of the at least one processor circuit is to generate the microservice instantiation request as a decryption microservice based on a type of the packet.

6. The apparatus as defined in any preceding claim, wherein one or more of the at least one processor circuit is to:
instantiate a first nested network function on the packet at a first time; and
cause a second nested network function to execute on the packet at a second time after the first time.

7. The apparatus as defined in claim 6, wherein one or more of the at least one processor circuit is to instantiate the first nested network function as at least one of a data plane development kit (DPDK) function, an OpenDataPlane (ODP) function or an Express Data Path (XDP) function.

8. The apparatus as defined in claim 6, wherein one or more of the at least one processor circuit is to determine the second time based on an egress latency value associated with a first processor circuit.

9. The apparatus as defined in claim 8, wherein one or more of the at least one processor circuit is to cause the second nested network function to instantiate a polling operation after a duration of the egress latency value.

10. The apparatus as defined in any preceding claim, wherein one or more of the at least one processor circuit is to cause the payload to be transmitted to a target processing circuit.

11. A method comprising:
causing transmission, by at least one processor circuit programmed by at least one instruction, of a first signal based on a packet, the first signal including characteristics of the packet; and
causing transmission, by one or more of the at least one processor circuit, of a second signal after the first signal, the second signal including a payload of the packet.

12. The method as defined in claim 11, further including generating the first signal with a microservice instantiation request.

13. The method as defined in claim 12, wherein the microservice instantiation request is based on a type of the packet.

14. The method as defined in claim 13, wherein the type of the packet includes at least one of encrypted or plaintext.

15. A computer program comprising instructions which, when the program is executed by a computer, cause the computer to carry out the method as claimed in any of claims 11 to 14.
